# EUROPÄISCHE PATENTSCHRIFT

(11) **EP 1 042 957 B1**
(45) Veröffentlichungstag und Bekanntmachung des Hinweises auf die Patenterteilung: **18.07.2007**
(21) Anmeldenummer: 99106883.4
(22) Anmeldetag: 07.04.1999
(51) Int. Cl.: A22C 11/10

(54) **Verfahren zum Abteilen von Abschnitten einer flexiblen Verpackungshülle**
Method for dividing a string of flexible packaging envelops
Procédé pour diviser un chapelet d'enveloppes d'emballage flexibles

(43) Veröffentlichungstag der Anmeldung: 11.10.2000
(73) Patentinhaber: Tipper Tie technopack GmbH, 21509 Glinde (DE)
(72) Erfinder: Plewa, Manfred, Dipl.-Ing., 27283 Verden (DE)
(74) Vertreter: Glawe, Delfs, Moll

(56) Entgegenhaltungen:
- EP-A- 0 247 545
- DE-A- 1 586 210
- DE-A- 2 344 226
- DE-A- 2 550 042
- DE-A1- 3 840 522
- US-A- 3 748 690
- US-A- 4 218 861
- US-A- 4 438 545
- US-A- 4 709 450

## Beschreibung

Die Erfindung betrifft ein Verfahren zum Abteilen von Abschnitten einer flexiblen Verpackungshülle durch Einschnüren der Verpackungshülle und Anbringen wenigstens einer Verschlußklammer auf dem eingeschnürten Bereich, mit den Schritten:
- zwei Verdrängerblechpaare erfassen den zu verschließenden Bereich der Verpackungshülle und verdrängen in diesem Bereich vorhandenes etwaiges Füllgut,
- die Verdrängerblechpaare werden axial voneinander weg verschoben und bilden zwischen sich einen Verpackungshüllenzopf für den Zugriff einer Verschließeinrichtung.

Bei der Herstellung von Würsten im Strangverfahren wird Wurstbrät aus einem Füllrohr in eine Verpackungshülle (Schlauch oder Darm) gefüllt. Der gefüllte Schlauch muß in bestimmten Abständen eingeschnürt bzw. gerafft und mit Verschlußklammern versehen werden. Das Aufbringen der Verschlußklammern erfolgt nach dem Raffen mittels eines Stempels. In der Regel müssen an einer Verschlußstelle zwei Klammern hintereinander angebracht werden, da auf das zu verschließende Ende einer vorlaufenden Wurst der ebenfalls zu verschließende Anfang einer nachlaufenden Wurst folgt.

Zu diesem Zweck ist es aus DE-A 23 44 226 bekannt, zwei Paare von Verdrängerblechen vorzusehen, die während des Einschnürvorgangs zunächst in Axialrichtung (der Wursthülle) dicht benachbart sind, nach dem Einschnüren in ihrer Schließstellung aber axial gespreizt werden und so einen im wesentlichen füllgutfreien Längenabschnitt (Zopf) der Wursthülle schaffen, auf den zwei Verschlußklammern gesetzt werden können.

Der Erfindung liegt die Aufgabe zugrunde, ein Verfahren der eingangs genannten Art zu schaffen, das eine verbesserte Betriebssicherheit aufweist.

Die Erfindung löst diese Aufgabe bei einem Verfahren der eingangs genannten Art durch die folgenden zusätzlichen Verfahrensschritte:
- die beiden Verdrängerblechpaare (5, 6) werden zunächst um eine solche Strecke voneinander weg verschoben, daß sich ein längerer Verpackungshüllenzopf (7) bildet, als für den Zugriff der Verschließeinrichtung (8, 9) erforderlich,
- vor dem Zugriff der Verschließeinrichtung (8, 9) werden diese Verdrängerblechpaare (5, 6) wieder axial aufeinander zu verschoben, um den Verpackungshüllenzopf (7) wenigstens teilweise zu entspannen,
- auf den wenigstens teilweise entspannten Verpackungshüllenzopf (7) wird mittels der Verschließeinrichtung (8, 9) wenigstens eine Verschlußklammer (10) gesetzt.

Zunächst seien einige im Rahmen der Erfindung verwendete Begriffe erläutert. Unter einem "Verdrängerblechpaar" ist jede Anordnung von Blechen, Scheren oder dergleichen zu verstehen, die relativ zueinander quer zur Axialrichtung der zu verschließenden schlauchförmigen Verpackungshülle verschieblich sind und beim Verschieben (quer zur Axialrichtung) von einer Öffnungs- in eine Schließstellung den von ihnen eingeschlossenen freien Querschnitt sukzessive vermindern und so die Verpackungshülle raffen bzw. einschnüren. Relativ zueinander sind diese beiden Verdrängerblechpaare in Axialrichtung (der Verpackungshülle) verschieblich. Im Rahmen der Durchführung des erfindungsgemäßen Verfahrens werden diese beiden Verdrängerblechpaare axial voneinander weg verschoben. Dies bedeutet, daß sich der axiale Abstand vergrößert. Realisiert werden kann dies durch eine axiale Bewegung beider Verdrängerblechpaare. Alternativ kann eines der Verdrängerblechpaare in Ruhe bleiben und nur das andere axial von ihm weg bewegt werden. Die Formulierung "axial voneinander weg verschieben" schließt diese Möglichkeit ein.

Der Begriff "Verpackungshüllenzopf" bezeichnet einen füllgutarmen oder -freien Hüllenabschnitt, auf den eine oder mehrere Verschlußklammern gesetzt werden können. Bei den Verschlußklammern handelt es sich in der Regel um Biegeklammern oder sogenannte Clipse (vorzugsweise aus Metall), die mittels einer im Stand der Technik bekannten Clipeinrichtung auf den Zopf gesetzt werden. Die Clipeinrichtung umfaßt üblicherweise einen Stempel sowie eine zugehörige Matrize zum Setzen und Verformen wenigstens einer Klammer. In der Regel setzt die Verschließeinrichtung in einem Arbeitsgang auf den Zopf zwei Klammern, die in einem solchen Abstand voneinander angeordnet sind, daß der zwischen ihnen liegende Zopfabschnitt durch ein Messer oder dergleichen durchtrennt werden kann. Man verschließt so in einem Arbeitsgang das nachlaufende Ende einer fertigen Wurst sowie das vorlaufende Ende der in einem nächsten Arbeitsgang zu füllenden Wurst.

Bei der Durchführung des erfindungsgemäßen Verfahrens werden die beiden Verdrängerblechpaare zunächst axial dicht benachbart angeordnet, die Wursthülle wird durch Schließen (Bewegung von der Öffnungs- in die Schließstellung quer zur Axialrichtung der Wursthülle) gerafft, anschließend wird durch axiales Auseinanderziehen der beiden Paare ein füllgutarmer oder füllgutfreier Zopf gebildet, auf den Verschlußklammern gesetzt werden können. Erfindungsgemäß ist nun vorgesehen, daß dieses sogenannte axiale Spreizen der Verdrängerblechpaare über das Maß hinaus erfolgt, das zur Schaffung des Raumes für den Eingriff der Verschließeinrichtung erforderlich ist. Die erforderliche Mindestlänge des Zopfes entspricht etwa der Erstreckung der Verschließeinrichtung bzw. -werkzeuge in Axialrichtung der Verpackungshülle. Ein ungestörter Zugriff der Verschließeinrichtung ist nur bei dieser Mindestlänge des Zopfes gewährleistet. Das erfindungsgemäße Verfahren spreizt die beiden Verdrängerblechpaare zunächst über dieses Mindestmaß hinaus voneinander weg zur Bildung eines entsprechenden längeren Zopfes, anschließend werden die Verdrängerblechpaare um eine Teilstrecke der durchgeführten Spreizung wieder axial aufeinander zu bewegt, so daß der gebildete Verpackungshüllenzopf wenigstens teilweise wieder entspannt wird. Der Zugriff der Verschließeinrichtung erfolgt anschließend auf den nicht oder allenfalls teilweise gespannten Zopf. Das axiale Aufeinander-zu-Verschieben der beiden Verdrängerblechpaare vor dem Zugriff der Verschließeinrichtung kann zwangsweise durch eine Betätigungseinrichtung erfolgen. Alternativ ist es möglich, lediglich das axiale Spreizen durch entsprechende Betätigungseinrichtungen durchführen zu lassen, das anschließende axiale Aufeinander-zuBewegen der beiden Verdrängerblechpaare erfolgt dann nicht durch Betätigungseinrichtungen, sondern durch die beim Spreizen aufgebaute Spannung im Material der Verpackungshülle bzw. des gebildeten Zopfes und/oder durch den Fülldruck des Füllgutes in der Verpackung. Diese Spannung zieht die Verdrängerblechpaare um eine gewisse Strecke aufeinander zu, dabei entspannt sich der Zopf. Auch diese Möglichkeit wird von der Formulierung "axial aufeinander zu verschoben" umfaßt.

Die Erfindung hat erkannt, daß die Verpackungshülle (bspw. der Wurstdarm) durch das Raffen zwecks Verdrängung des Füllguts, Spreizen zwecks Bildung eines füllgutarmen Zopfes und anschließendes Verschließen mittels Clipse erheblich beansprucht wird. Wird ein Clip zu fest auf den im Stand der Technik unter Spannung stehenden Zopf gesetzt, kann er die Hülle durchschlagen. Die Verpackung ist dann an dieser Stelle undicht, es kann zum Platzen einer prallgefüllten Wurst an dieser Stelle oder totalen Abriß des Wurstzipfels kommen. Will man das Durchschlagen des Darms vermeiden, kann dies dazu führen, daß ein Clip zu lose gesetzt wird, so daß er unter dem Fülldruck der nachfolgenden Wurstportion vom Zipfel abrutscht. Der Füllvorgang muß dann unterbrochen, die Maschine gereinigt und neu gestartet werden.

Die Erfindung hat erkannt, daß ein Setzen des Clips auf einen nicht oder nur teilweise gespannten Hüllenabschnitt dessen Beanspruchung wesentlich reduziert. Ein auf einen nicht längsgereckten Darm gesetzter Clip neigt weniger zum Abrutschen, er kann zudem fester verschlossen werden als im Stand der Technik, da das nicht gespannte Darmmaterial nachgiebiger ist und weniger leicht beim Verschließvorgang durchschlagen wird.

Bezeichnet man die für den Zugriff der Verschließeinrichtung erforderliche Mindestlänge des Zopfes mit x, werden erfindungsgemäß die beiden Verdrängerblechpaare zunächst soweit axial gespreizt, daß sich bevorzugt ein Zopf der Länge 1,1x bis 2x, bevorzugt 1,2x bis 1,5x, besonders bevorzugt etwa 1,25x bildet. Die Bildung eines Zopfes 1,25x bedeutet, daß eine Überspreizung um 25% über das eigentlich erforderliche Maß hinaus stattfindet. Vor dem Setzen der Verschlußklammern werden die Verdrängerblechpaare wieder axial aufeinander zu bewegt, so daß sich ein ganz oder teilweise entspannter Zopf etwa der Länge x bildet.

Gelegentlich ist die Herstellung locker gefüllter Verpackungen erwünscht. Erforderlich kann dies bspw. sein, wenn die gefüllte Verpackung nach dem Füllvorgang in eine abweichende Form gebracht werden soll, wie es bei der Herstellung von kastenförmigen Formschinken geschieht. Im Rahmen der Erfindung ist es dann möglich, die Verschlußklammern auf einen Zopf zu setzen, der deutlich länger ist als die Mindestlänge x. Nach der Entnahme der gefüllten Verpackung kann dann Füllgut aus dem prallgefüllten Bereich in den überschüssigen Zopfabschnitt zurückströmen, so daß eine locker gefüllte Verpackung entsteht.

Wird zwecks Herstellung der Lockerfüllung ein Zopf der Länge 5x benötigt, auf den Verschlußklammern gesetzt werden, wird im Rahmen der Erfindung bspw. zunächst eine Spreizung auf die Zopflänge 6,25x durchgeführt, vor dem Setzen der Klammern wird durch axiales Aufeinanderzuverschieben der Verdrängerblechpaare ein entspannter Zopf der gewünschten Länge 5x hergestellt.

Die technische Realisierung der axialen Verschiebung von Verdrängerblechpaaren relativ zueinander ist dem Fachmann geläufig und bedarf hier keiner näheren Erläuterung. Sie kann bspw. hydraulisch, pneumatisch oder durch eine Kurvensteuerung realisiert werden.

Ein Ausführungsbeispiel der Erfindung wird im folgenden anhand der Zeichnung erläutert, die schematisch den Ablauf des erfindungsgemäßen Verfahrens zeigt. Ein Füllrohr 1 für Wurstbrät ist von einem Wurstdarmvorrat 2 umhüllt. Eine am Füllende des Füllrohrs 1 angeordnete Darmbremse 3 kontrolliert das Abziehen von Darm 2 vom Füllrohr 1. Aus dem Füllrohr 1 wird Wurstbrät in die Verpackungshülle 2 gedrückt, die Darmbremse 3 wird dabei so eingestellt, daß Darm 2 vom Füllrohr 1 abgezogen werden kann und sich ein im wesentlichen prallgefüllter Darmabschnitt 4 bildet. Dieser Darmabschnitt 4 ist an einem vorlaufenden Ende mit einer Verschlußklammer verschlossen (in der Zeichnung nicht dargestellt).

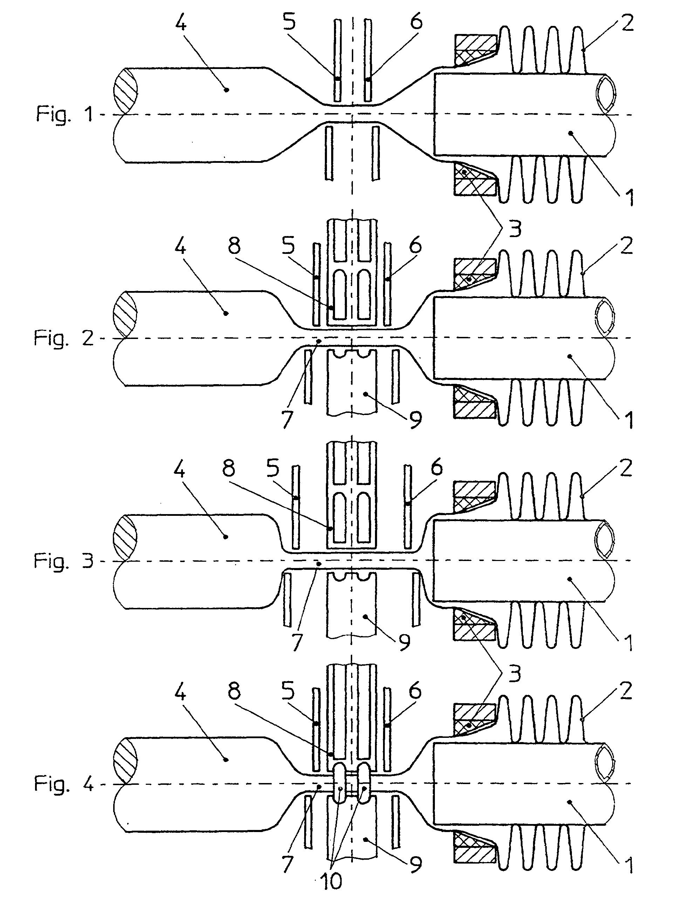

Nach Einfüllen der gewünschten Wurstbrätmenge fahren zwei Verdrängerblechpaare 5, 6, die zunächst axial dicht benachbart angeordnet sind, in einen in der Nähe des Auslassendes des Füllrohrs 1 befindlichen im wesentlichen prall gefüllten Darmabschnitt, verdrängen das Füllgut daraus und raffen diesen zu einem kurzen Zopf, in dem kein oder nur noch wenig Füllgut vorhanden ist. Die Verdrängerblechpaare 5, 6 haben auf diese Weise einen im wesentlichen prall gefüllten Abschnitt 4 der Verpackungshülle bzw. des Wurstdarms 2 abgeteilt. Dieser Zustand ist in Fig. 1 dargestellt.

Im nächsten Schritt werden die geschlossenen Verdrängerblechpaare 5, 6 axial voneinander weg verschoben, um den durch den Einschnürvorgang gebildeten Darmzopf zu verlängern. Wahlweise kann nur das in Füllrichtung des Wurstbräts stromab befindliche Verdrängerblechpaar 5 vom Füllrohr 1 weg verschoben werden oder aber beide Paare 5, 6 werden bewegt, wobei dann das Verdrängerblechpaar 6 auf Füllrohr 1 zu verschoben wird. Ist bei diesem Spreizvorgang die Darmbremse 3 fest angezogen, kann kein weiterer Darm vom Füllrohr 1 nachgezogen werden, und der Abschnitt 4 wird während des Spreizvorgangs noch fester gepackt. Alternativ kann man vorsehen, daß die Darmbremse 3 etwas gelockert ist und das Verdrängerblechpaar 6 den Zopf lediglich so einschnürt, daß weiteres Darmmaterial 2 durch die Darmbremse 3 und das Verdrängerblechpaar 6 hindurchgezogen und den während des Spreizvorgangs erzeugten verlängerten Zopf 7 bilden kann.

In Fig. 2 ist der Spreizvorgang gerade soweit durchgeführt worden, daß das einen Stempel 8 (mit Führungsbahn für das Heranführen von Verschlußklammern) und eine Matrize 9 umfassende Verschließwerkzeug bereits zwischen die Verdrängerblechpaare 5, 6 paßt und an den Zopf 7 herangeführt werden kann. Zunächst werden jedoch keine Verschlußklammern gesetzt, sondern der Spreizvorgang weitergeführt, bis sich, wie in Fig. 3 dargestellt, ein Zopf 7 größerer Länge gebildet hat als für den Zugriff der Verschließeinrichtung 8, 9 erforderlich. Anschließend werden die Verdrängerblechpaare 5, 6 wieder axial aufeinander zu bewegt, bis sie die in Fig. 4 gezeigte Stellung einnehmen. Ihr Abstand ist jetzt gerade so, daß die Verschließeinrichtung 8, 9 zwischen den Verdrängerblechpaaren 5, 6 durchgreifen und auf den nunmehr entspannten Zopf 7 zwei bei 10 angedeutete Verschlußklammern setzen kann.

Anschließend wird der Darm 2 zwischen den beiden Verschlußklammern 10 durch eine in der Zeichnung nicht dargestellte Trenneinrichtung durchtrennt. Der gefüllte und beidseitig verschlossene Wurstabschnitt 4 wird entnommen. Die stromauf gesetzte zweite Klammer 10 dient dem verschluß des vorlaufenden Endes des nachfolgend zu befüllenden Wurstabschnittes.

## Patentansprüche

1. Verfahren zum Abteilen von Abschnitten (4) einer flexiblen Verpackungshülle (2) durch Einschnüren der Verpakkungshülle (2) und Anbringen wenigstens einer Verschlußklammer (10) auf dem eingeschnürten Bereich (7), mit den Schritten:
- zwei Verdrängerblechpaare (5, 6) erfassen den zu verschließenden Bereich der Verpackungshülle (2) und verdrängen in diesem Bereich vorhandenes etwaiges Füllgut,
- die Verdrängerblechpaare (5, 6) werden axial voneinander weg verschoben und bilden zwischen sich einen Verpackungshüllenzopf (7) für den Zugriff einer Verschließeinrichtung (8, 9),
**gekennzeichnet durch** die folgenden verfahrensschritte:
- die beiden Verdrängerblechpaare (5, 6) werden zunächst um eine solche Strecke voneinander weg verschoben, daß sich ein längerer Verpackungshüllenzopf (7) bildet, als für den Zugriff der Verschließeinrichtung (8, 9) erforderlich,
- vor dem Zugriff der Verschließeinrichtung (8, 9) werden diese Verdrängerblechpaare (5, 6) wieder axial aufeinander zu verschoben, um den Verpackungshüllenzopf (7) wenigstens teilweise zu entspannen,
- auf den wenigstens teilweise entspannten Verpackungshüllenzopf (7) wird mittels der Verschließeinrichtung (8, 9) wenigstens eine Verschlußklammer (10) gesetzt.

2. Verfahren nach Anspruch 1, **dadurch gekennzeichnet, daß** die beiden Verdrängerblechpaare (5, 6) zur Bildung des Verpackungshüllenzopfes (7) wenigstens um 25% weiter voneinander weg verschoben werden, als für den Zugriff der verschließeinrichtung (8, 9) erforderlich.

3. Verfahren nach Anspruch 1 oder 2, **dadurch gekennzeichnet, daß** die beiden verdrängerblechpaare (5, 6) vor dem Zugriff der Verschließeinrichtung (8, 9) um eine solche Strecke wieder axial aufeinander zu verschoben werden, daß der zwischen ihnen gebildete Verpackungshüllenzopf (7) etwa eine für den Zugriff der Verschließeinrichtung (8, 9) erforderliche Länge aufweist.

4. Verfahren nach Anspruch 1 oder 2, **dadurch gekennzeichnet, daß** die beiden Verdrängerblechpaare (5, 6) vor dem Zugriff der Verschließeinrichtung (8, 9) um eine solche Strecke wieder axial aufeinander zu verschoben werden, daß der zwischen ihnen gebildete Verpackungshüllenzopf (7) länger ist als für den Zugriff der Verschließeinrichtung (8, 9) erforderlich.

## Claims

1. Method of dividing up portions (4) of a flexible packaging casing (2) by constricting the packaging casing (2) and fitting at least one sealing clip (10) on the constricted region (7), having the following steps:
- two displacer-plate pairs (5, 6) grip that region of the packaging casing (2) which is to be sealed and displace any contents which are present in this region,
- the displacer-plate pairs (5, 6) are shifted axially apart from one another and form, between them, a packaging-casing pleat (7) for the engagement of a sealing device (8, 9),
**characterized by** the following method steps:
- the two displacer-plate pairs (5, 6), first of all, are shifted apart from one another by such a distance as to form a longer packaging-casing pleat (7) than is necessary for the engagement of the sealing device (8, 9),
- prior to the engagement of the sealing device (8, 9), these displacer-plate pairs (5, 6) are shifted axially towards one another again in order at least partially to relieve the packaging-casing pleat (7) of stressing,
- the sealing device (8, 9) positions at least one sealing clip (10) on the packaging-casing pleat (7), which is at least partially relieved of stressing.

2. Method according to Claim 1, **characterized in that**, in order to form the packaging-casing pleat (7), the two displacer-plate pairs (5, 6) are shifted apart from one another at least by 25% further than is necessary for the engagement of the sealing device (8, 9).

3. Method according to Claim 1 or 2, **characterized in that**, prior to the engagement of the sealing device (8, 9), the two displacer-plate pairs (5, 6) are shifted axially towards one another again by such a distance that the packaging-casing pleat (7) formed between them is approximately of a length which is necessary for the engagement of the sealing device (8, 9).

4. Method according to Claim 1 or 2, **characterized in that**, prior to the engagement of the sealing device (8, 9), the two displacer-plate pairs (5, 6) are shifted axially towards one another again by such a distance that the packaging-casing pleat (7) formed between them is longer than is necessary for the engagement of the sealing device (8, 9).

## Revendications

1. Procédé pour diviser des parties (4) d'une enveloppe d'emballage (2) flexible par rétrécissement de l'enveloppe d'emballage (2) et le placement d'au moins une agrafe de fermeture (10) sur la zone (7) rétrécie, comprenant les étapes suivantes :
- deux paires de tôles de refoulement (5, 6) saisissent la zone à fermer de l'enveloppe d'emballage (2) et refoulent la matière de remplissage éventuellement présente dans cette zone,
- les paires de tôles de refoulement (5, 6) sont déplacées axialement les unes à partir des autres et forment entre elles une tresse d'enveloppe d'emballage (7) pour la saisie d'un dispositif de fermeture (8, 9),
**caractérisé par** les étapes de procédé suivantes :
- les deux paires tôles de refoulement (5, 6) sont déplacées d'abord les unes à partir des autres d'un tronçon tel qu'il se forme une tresse d'enveloppe d'emballage (7) plus longue que nécessaire pour la saisie du dispositif de fermeture (8, 9),
- avant la saisie du dispositif de fermeture (8, 9), ces paires de tôles de refoulement (5, 6) sont déplacées à nouveau les unes vers les autres axialement, afin de soulager au moins partiellement la tresse d'enveloppe d'emballage (7),
- sur la tresse d'enveloppe d'emballage (7) au moins partiellement soulagée, au moins une agrafe de fermeture (10) est placée au moyen du dispositif de fermeture (8, 9).

2. Procédé selon la revendication 1, **caractérisé en ce que** les deux paires de tôles de refoulement (5, 6) sont déplacées les unes à partir des autres, pour former la tresse d'enveloppe d'emballage (7), d'au moins 25 % de plus que pour la saisie du dispositif de fermeture (8, 9).

3. Procédé selon la revendication 1 ou 2, **caractérisé en ce que** les deux paires de tôles de refoulement (5, 6) sont déplacées à nouveau axialement les unes vers les autres, avant la saisie du dispositif de fermeture (8, 9), d'un tronçon tel que la tresse d'enveloppe d'emballage (7) formée entre elles présente à peu près une longueur nécessaire pour la saisie du dispositif de fermeture (8, 9).

4. Procédé selon la revendication 1 ou 2, **caractérisé en ce que** les deux paires de tôles de refoulement (5, 6) sont déplacées à nouveau axialement les unes vers les autres, avant la saisie du dispositif de fermeture (8, 9) d'un tronçon tel que la tresse d'enveloppe d'emballage (7) formée entre elle est plus longue que nécessaire pour la saisie du dispositif de fermeture (8, 9).
